# EUROPÄISCHE PATENTSCHRIFT

(11) **EP 0 917 682 B1**
(45) Veröffentlichungstag und Bekanntmachung des Hinweises auf die Patenterteilung: **31.05.2000**
(21) Anmeldenummer: 98913628.8
(22) Anmeldetag: 03.03.1998
(51) Int. Cl.: G06F 13/38

(54) **FLEXIBLE SCHNITTSTELLE**
FLEXIBLE INTERFACE
INTERFACE SOUPLE

(30) Priorität: 04.03.1997 DE 19708755
(43) Veröffentlichungstag der Anmeldung: 26.05.1999
(73) Patentinhaber: Tasler, Michael, 97074 Würzburg (DE)
(72) Erfinder: Tasler, Michael, 97074 Würzburg (DE)
(74) Vertreter: Schoppe, Fritz, Dipl.-Ing.
(86) Internationale Anmeldenummer: EP9801187
(87) Internationale Veröffentlichungsnummer: WO9839710

(56) Entgegenhaltungen:
- US-A- 5 291 611
- US-A- 5 444 644
- US-A- 5 487 154
- US-A- 5 510 775

## Beschreibung

Die vorliegende Erfindung bezieht sich auf die Übertragung von Daten und insbesondere auf Schnittstellengeräte zur Kommunikation zwischen einem Computer oder Hostgerät und einer Datensende/Empfangseinrichtung, von der Daten erfaßt werden sollen, bzw. mit der zweiseitig kommuniziert werden soll.

Bisherige Datenerfassungssysteme für Computer sind sehr stark in ihrem Einsatzbereich limitiert. Allgemein können dieselben in zwei Gruppen eingeteilt werden.

Bei der ersten Gruppe werden Hostgeräte oder Computersysteme mittels einer Schnittstelle mit einem Gerät verbunden, dessen Daten erfaßt werden sollen. Die Schnittstellen dieser Gruppe sind üblicherweise Standardschnittstellen, die mit spezieller Treibersoftware für verschiedene Hostsysteme einsetzbar sind. Ein Vorteil dieser Schnittstellengeräte besteht darin, daß sie vom Hostgerät weitgehend unabhängig sind. Nachteilig ist jedoch, daß sie im allgemeinen sehr aufwendige Treiber benötigen, die störungsanfällig sind und die Datenübertragungsraten zwischen dem mit der Schnittstelle verbundenen Gerät und dem Hostgerät und umgekehrt limitieren. Ferner sind Implementationen dieser Schnittstellen für tragbare Systeme teilweise nur schwer möglich und die Anpassungsmöglichkeiten sind gering, weshalb diese Systeme eine geringe Flexibilität besitzen.

Die Geräte, von denen Daten zu erfassen sind, besetzen die ganze Bandbreite der Elektrotechnik. So ist bei einem typischen Szenario davon auszugehen, daß ein Kunde, der beispielsweise im medizintechnischen Bereich eine Röntgendiagnoseanlage betreibt, über einen Fehler berichtet. Ein Servicemitarbeiter des Geräteherstellers wird dann zu dem Kunden gehen und von dem Röntgendiagnosegerät erstellte Systemprotokolldateien beispielsweise mittels eines tragbaren Computer oder Laptops auslesen. Wenn der Fehler dann nicht zu lokalisieren ist, oder wenn ein Fehler nur sporadisch auftritt, wird es erforderlich sein, daß der Servicemitarbeiter nicht nur eine Fehlerprotokolldatei sondern auch Daten aus dem laufenden Betrieb auslesen muß. Es ist offensichtlich, daß hier eine schnelle Datenübertragung sowie eine schnelle Datenanalyse notwendig ist.

Ein anderer Fall zum Einsatz einer Schnittstelle kann beispielsweise das Verbinden eines elektronischen Meßgeräts, z. B. eines Multimeters, mit einem Computersystem sein, um von dem Multimeter gemessene Daten auf den Computer zu übertragen. Insbesondere bei Langzeitmessungen oder beim Auftreten großer Datenmengen ist es erforderlich, daß die Schnittstelle eine hohe Datenübertragungsrate ermöglicht.

Aus diesen zufällig gewählten Beispielen ist zu sehen, daß die Einsatzmöglichkeiten einer Schnittstelle völlig voneinander unterschiedlich sein können. Es ist daher wünschenswert, daß eine Schnittstelle derart flexibel ist, daß mittels einer Schnittstelle sehr unterschiedliche elektrische oder elektronische Systeme mit einem Hostgerät verbunden werden können. Um Fehlbedienungen zu vermeiden, ist es ferner wünschenswert, daß ein Servicemitarbeiter nicht für jede unterschiedliche Anwendung unterschiedliche Schnittstellen auf unterschiedliche Art und Weise bedienen muß, sondern daß möglichst eine universelle Schnittstellenbedienung für eine große Anzahl von Einsatzmöglichkeiten geschaffen wird.

Um die Datenübertragungsraten über eine Schnittstelle zu erhöhen, wurde bei der zweiten Gruppe von Schnittstellengeräten der Weg beschritten, die Schnittstelle sehr stark an individuelle Hostsysteme oder Computersysteme einzeln anzupassen. Der Vorteil dieser Lösung besteht darin, daß hohe Transferraten möglich sind. Ein Nachteil ist jedoch, daß die Treiber für die Schnittstellen der zweiten Gruppe sehr stark an ein einziges Hostsystem angepaßt sind, weshalb sie im allgemeinen nicht oder nur sehr uneffektiv für andere Hostsysteme einsetzbar sind. Ferner weisen diese Typen von Schnittstellen den Nachteil auf, daß sie im Computergehäuse montiert werden müssen, da sie auf das interne Hostbussystem zugreifen, um maximale Datenübertragungsraten zu erreichen. Sie sind daher im allgemeinen nicht für tragbare Hostsysteme in Form von Laptops geeignet, die aufgrund ihrer möglichst geringen Größe kein freies Innenvolumen zum Einstecken einer Schnittstellenkarte besitzen.

Eine Lösung für dieses Problem bieten Schnittstellengeräte der Firma IOtech (Geschäftsadresse: 25971 Cannon Road, Cleveland, Ohio 44146, USA), die für Laptops geeignet sind, wie z. B. das Modell WaveBook/512 (eingetragenens Warenzeichen). Die Schnittstellengeräte werden mittels einer steckbaren, etwa scheckkartengroßen Einsteckkarte mit der PCMCIA-Schnittstelle, die mittlerweile an Laptops standardmäßig vorgesehen sind, verbunden. Die Einsteckkarte bewirkt eine Transformation der PCMCIA-Schnittstelle zu einer in der Technik bekannten Schnittstelle IEEE 1284. Die genannte Steckkarte schafft eine bezüglich der Datenrate erweiterte Spezial-Druckerschnittstelle, die eine Datenübertragungsrate von etwa 2 MB/s im Gegensatz zu einer Rate von etwa 1MB/s bei bekannten Druckerschnittstellen liefert. Das bekannte Schnittstellengerät besteht im allgemeinen aus einem Treiberbaustein, einem digitalen Signalprozessor, einem Puffer und einer Hardwarebaugruppe, die in einem Verbinder mündet, an dem das Gerät angeschlossen wird, dessen Daten zu erfassen sind. Der Treiberbaustein ist direkt mit der erweiterten Druckerschnittstelle verbunden, wodurch die bekannte Schnittstelleneinrichtung eine Verbindung zwischen einem Computer und dem Gerät herstellt, dessen Daten erfaßt werden sollen.

Um mit der genannten Schnittstelle zu arbeiten, muß ein schnittstellenspezifischer Treiber in dem Hostgerät installiert werden, damit das Hostgerät mit dem digitalen Signalprozessor der Schnittstellenkarte kommunizieren kann. Wie es bereits erwähnt wurde, muß der Treiber auf dem Hostgerät installiert werden. Ist der Treiber ein speziell für das Hostgerät entworfener Treiber, so wird zwar eine schnelle Datenübertragung ermöglicht, der Treiber kann jedoch nicht ohne weiteres auf einem anderen Hostsystem installiert werden. Ist der Treiber jedoch ein möglichst flexibler allgemeiner Treiber, der für viele Hostgeräte einsetzbar ist, dann müssen Kompromisse bezüglich der Datenübertragungsrate in Kauf genommen werden.

Speziell bei einer Anwendung für Multi-Tasking-Systeme, bei denen mehrere verschiedene Aufgaben, wie z. B. eine Datenerfassung, eine Datendarstellung oder ein Editieren im wesentlichen gleichzeitig zu bearbeiten sind, wird üblicherweise jeder Aufgabe vom Hostsystem eine gewisse Priorität zugeordnet. Ein Treiber, der eine spezielle Aufgabe unterstützt, fragt im zentralen Verarbeitungssystem des Hostgeräts an, ob er Prozessorresourcen haben kann, um seine Aufgabe zu erledigen. Abhängig vom jeweiligen Prioritätszuweisungsverfahren und abhängig von der Implementation des Treibers wird eine spezielle Aufgabe einen bestimmten Anteil der Prozessorresourcen in bestimmten Zeitschlitzen erhalten. Konflikte ergeben sich dann, wenn einer oder mehrere Treiber derart implementiert sind, daß sie standardmäßig die höchste Priorität haben, d. h. daß sie inkompatibel sind, wie es bei vielen Anwendungen in der Praxis der Fall ist. So kann es vorkommen, daß beide Treiber eingestellt sind, um die höchste Priorität zu haben, was im schlimmsten Fall sogar zu einem Systemabsturz führen kann.

Die EP 0685799 A1 offenbart eine Schnittstelle mittels derer mehrere Peripheriegeräte an einen Bus angeschlossen werden können. Eine Schnittstelle ist zwischen den Bus eines Hostgeräts und verschiedene Peripheriegeräte geschaltet. Die Schnittstelle umfaßt eine Zustandsmaschine sowie mehrere jeweils einem Peripheriegerät zugeordnete Zweige. Jeder Zweig umfaßt einen Daten-Manager, eine Zyklussteuerung, eine Benutzerlogik sowie einen Puffer. Dieses bekannte Schnittstellengerät schafft eine optimale Anpassung zwischen einem Hostgerät und einem speziellen Peripheriegerät.

Die Fachveröffentlichung IBM Technical Disclosure Bulletin, Bd. 38, Nr. 05, S. 245; "Communication Method between Devices through FDD Interface" offenbart eine Schnittstelle, die ein Hostgerät über eine Diskettenlaufwerksschnittstelle mit einem Peripheriegerät verbindet. Die Schnittstelle besteht insbesondere aus einem Adressengenerator, einem MFM-Decodierer/Codierer, einem Seriell/Parallel-Wandler und einem Formatsignalgenerator. Durch die Schnittstelle ist es möglich, an den FDD-Host-Controller eines Hostgeräts nicht nur ein Diskettenlaufwerk sondern auch ein anderes Peripheriegerät anzuschließen. Das Hostgerät nimmt dabei an, daß an seiner Diskettenlaufwerksteuerung immer ein Diskettenlaufwerk angeschlossen ist, wobei bei einer Adressenübereinstimmung eine Kommunikation startet. Die Schrift enthält jedoch keinen Hinweis darauf, wie eine Kommunikation möglich werden soll, wenn die Schnitttstelle statt an eine Diskettenlaufwerkssteuerung an eine Vielzweckschnittstelle angeschlossen wird.

Die Aufgabe der vorliegenden Erfindung besteht darin, ein Schnittstellengerät zur Kommunikation zwischen einem Hostgerät und einer Datensende/Empfangseinrichtung zu schaffen, das unabhängig vom Hostgerät einsetzbar ist und eine hohe Datenübertragungsrate ermöglicht.

Diese Aufgabe wird durch ein Schnittstellengerät gemäß Anspruch 1 oder 12 sowie durch ein Verfahren gemäß Anspruch 15 gelöst.

Der vorliegenden Erfindung liegt die Erkenntnis zugrunde, daß sowohl eine hohe Datenübertragungsrate als auch eine vom Hostgerät unabhängige Einsetzbarkeit erreicht werden können, wenn auf einen Treiber für ein Hostgerät-übliches Eingabe/Ausgabe-Gerät zurückgegriffen wird, der üblicherweise in den allermeisten auf dem Markt verfügbaren Hostgeräten vorhanden ist. Treiber für Hostgerät-übliche Eingabe/Ausgabe-Geräte, die praktisch in jedem Hostgerät vorhanden sind, sind beispielsweise Treiber für Festplatten, Graphikgeräte oder Druckergeräte. Da jedoch die Festplattenschnittstellen bei den üblichen Hostgeräten, die beispielsweise IBM-PCs, IBM-kompatible-PCs, Commodore-PCs, Apple-Computer oder auch Workstations sein können, die Schnittstellen mit der schnellsten Datenübertragungsrate sind, wird bei dem bevorzugten Ausführungsbeispiel des Schnittstellengeräts der vorliegenden Erfindung auf den Treiber für die Festplatte zurückgegriffen. Auf Treiber für andere Speichergeräte, wie z. B. Diskettenlaufwerke, CD-ROM-Laufwerke oder Bandlaufwerke, könnte jedoch ebenfalls zurückgegriffen werden, um das Schnittstellengerät gemäß der vorliegenden Erfindung zu implementieren.

Wie es weiter hinten noch ausgeführt wird, soll das erfindungsgemäße Schnittstellengerät mit einer Vielzweckschnittstelle des Hostgeräts, die z. B. als SCSI-Schnittstelle oder erweiterte Druckerschnittstelle implementiert sein kann, mit demselben verbunden werden. Vielzweckschnittstellen umfassen zum einen eine Schnittstellenkarte und zum anderen eine dafür spezifische Treibersoftware. Die Treibersoftware kann so ausgestaltet sein, daß sie BIOS-Treiberroutinen ersetzen kann. Die Kommunikation zwischen dem Hostgerät und den an der Vielzweckschnittstelle angeschlossenen Geräten findet dann im wesentlichen mittels der für die Vielzweckschnittstelle spezifischen Treibersoftware statt und nicht mehr überwiegend durch BIOS-Routinen des Hostgeräts. Neuerdings können jedoch auch Treiber für Vielzweckschnittstellen bereits im BIOS-System des Hostgeräts integriert sein, da Vielzweckschnittstellen neben den klassischen Eingabe/Ausgabe-Schnittstellen für Hostgeräte immer üblicher werden. Selbstverständlich ist es ebenfalls möglich, BIOS-Routinen parallel zu der spezifischen Treibersoftware für die Vielzweckschnittstelle zu verwenden, wenn es erwünscht ist.

Das Schnittstellengerät gemäß der vorliegenden Erfindung umfaßt eine Prozessoreinrichtung, eine Speichereinrichtung, eine erste Verbindungseinrichtung zum schnittstellenmäßigen Verbinden des Hostgeräts mit dem Schnittstellengerät und eine zweite Verbindungseinrichtung zum schnittstellenmäßigen Verbinden des Schnittstellengeräts mit der Datensende/Empfangseinrichtung. Das Schnittstellengerät wird durch die Prozessoreinrichtung und die Speichereinrichtung derart konfiguriert, daß das Schnittstellengerät bei einer Anfrage des Hostgeräts über die erste Verbindungseinrichtung, die die Art eines Geräts betrifft, das mit dem Hostgerät verbunden ist, unabhängig von dem Typ der Datensende/Empfangseinrichtung ein Signal über die erste Verbindungseinrichtung zum Hostgerät sendet, das dem Hostgerät signalisiert, daß es mit einem Eingabe/Ausgabe-Gerät kommuniziert. Das Schnittstellensystem gemäß der vorliegenden Erfindung simuliert somit sowohl hardware- als aus auch softwaretechnisch die Funktionsweise eines üblichen Eingabe/Ausgabe-Geräts und vorzugsweise eines Festplattenlaufwerks. Da die Unterstützung von Festplatten in allen verfügbaren Hostsystemen standardmäßig implementiert ist, kann beispielsweise die Simulation einer Festplatte die Unabhängigkeit vom verwendeten Hostsystem erreichen. Das erfindungsgemäße Schnittstellengerät kommuniziert somit mit dem Hostgerät oder Computer nicht mehr über einen speziell entworfenen Treiber sondern über ein in dem BIOS-System (BIOS = Basic Input/Output System = Grund Eingabe/Ausgabe System) vorhandenes Programm, das üblicherweise genau auf das spezielle Computersystem abgestimmt ist, auf dem es installiert ist, bzw. über ein für die Vielzweckschnittstelle spezifisches Programm. Somit vereinigt das Schnittstellengerät gemäß der vorliegenden Erfindung die Vorteile beider Gruppen. Zum einen findet die Datenkommunikation zwischen dem Computer und der Schnittstelle über ein Hostgerät-spezifisches BIOS-Programm bzw. über ein auf die Vielzweckschnittstelle zugeschnittenes Treiberprogramm statt, das als "gerätespezifischer Treiber" angesehen werden könnte. Zum anderen ist das BIOS-Programm bzw. ein entsprechendes Vielzweckschnittstellenprogramm, das eine der üblichen Eingabe/Ausgabe-Schnittstellen in Hostsystemen bedient, in eben jedem Hostsystem vorhanden, weshalb das Schnittstellengerät gemäß der vorliegenden Erfindung Hostgerät-unabhängig ist.

Bevorzugte Ausführungsbeispiele der vorliegenden Erfindung werden nachfolgend bezugnehmend auf die beiliegenden Zeichnungen detaillierter erläutert. Es zeigen:
- Fig. 1: ein prinzipielles Blockschaltbild des Schnittstellengeräts gemäß der vorliegenden Erfindung; und
- Fig. 2: ein detailliertes Blockschaltbild eines Schnittstellengeräts gemäß einem bevorzugten Ausführungsbeispiel der vorliegenden Erfindung.

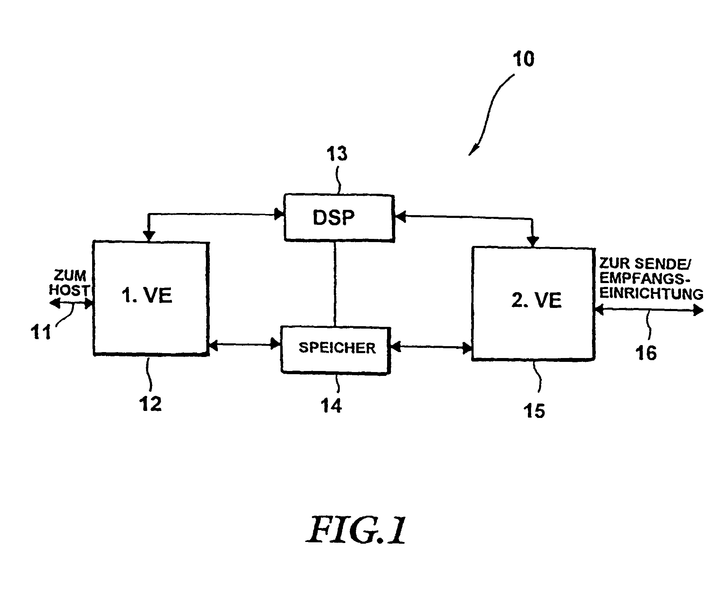

Fig. 1 zeigt ein prinzipielles Blockschaltbild eines Schnittstellengeräts 10 gemäß der vorliegenden Erfindung. Über eine Hostleitung 11 ist eine erste Verbindungseinrichtung 12 des Schnittstellengeräts 10 mit einem Hostgerät (nicht gezeigt) verbindbar. Die erste Verbindungseinrichtung ist sowohl an einen digitalen Signalprozessor 13 als auch an einen Speicher 14 angeschlossen. Der digitale Signalprozessor 13 sowie der Speicher 14 sind ferner mittels bidirektionaler Kommunikationsleitungen (bei allen Leitungen durch zwei Richtungspfeile angezeigt) mit einer zweiten Verbindungseinrichtung 15 gekoppelt. Mittels einer Ausgangsleitung 16 kann die zweite Verbindungseinrichtung mit einer Sende/Empfangseinrichtung gekoppelt werden, die Daten von dem Hostgerät empfangen soll oder von der Daten ausgelesen, d. h. erfaßt, und zu dem Hostgerät übertragen werden sollen. Über die erste und die zweite Verbindungseinrichtung kann die Sende/Empfangseinrichtung selbst ebenfalls aktiv mit dem Hostgerät kommunizieren, wie es weiter hinten noch detaillierter dargestellt wird.

Die Kommunikation zwischen dem Hostsystem oder Hostgerät und dem Schnittstellengerät basiert auf bekannten Standard-Zugriffsbefehlen, wie sie von allen bekannten Betriebssystemen (z. B. DOS, Windows, Unix) unterstützt werden. Vorzugsweise simuliert das Schnittstellengerät gemäß der vorliegenden Erfindung eine Festplatte mit einem Wurzelverzeichnis oder "Root-Directory", dessen Einträge "virtuelle" Dateien sind, die für verschiedenste Funktionen angelegt werden können. Wenn das Hostgerätsystem, mit dem das Schnittstellengerät gemäß der vorliegenden Erfindung verbunden ist, wobei mit dem Schnittstellengerät 10 ferner eine Sende/Empfangseinrichtung verbunden ist, hochgefahren wird, geben übliche BIOS-Routinen oder Vielzweckschnittstellenprogramme an in dem Hostgerät vorhandene Eingabe/Ausgabe-Schnittstellen einen Befehl aus, der in der Fachwelt als Befehl "INQUIRY" ("Erkundigung") bekannt ist. Über die erste Verbindungseinrichtung wird der digitale Signalprozessor 13 diese Anfrage empfangen und ein Signal erzeugen, das wiederum über die erste Verbindungseinrichtung 12 und die Hostleitung 11 zum Hostgerät (nicht gezeigt) gesendet wird. Dieses Signal wird dem Hostgerät signalisieren, daß an der betreffenden Schnittstelle, zu der der Befehl INQUIRY gesendet wurde, z. B. ein Festplattenlaufwerk angeschlossen ist. Optional kann das Hostgerät einen für Fachleute bekannten Befehl "Test Unit Ready" zum Schnittstellengerät senden, der genauere Details bezüglich des angefragten Geräts wünscht.

Unabhängig davon, welche Sende/Empfangseinrichtung an der Ausgangsleitung 16 mit der zweiten Verbindungseinrichtung verbunden ist, teilt der digitale Signalprozessor 13 dem Hostgerät mit, daß das Hostgerät mit einem Festplattenlaufwerk kommuniziert. Empfängt das Hostgerät die Antwort, daß ein Laufwerk vorhanden ist, wird es nun die Aufforderung zum Schnittstellengerät 10 schicken, die Boot-Sequenz, die sich üblicherweise bei tatsächlichen Festplatten auf den ersten Sektoren derselben befindet, zu lesen. Der digitale Signalprozessor 13, dessen Betriebssystem in der Speichereinrichtung 14 gespeichert ist, wird diesen Befehl beantworten, indem er eine virtuelle Boot-Sequenz zum Hostgerät sendet, die bei tatsächlichen Laufwerken den Typ, die Startposition und die Länge der FAT (FAT = File Allocation Table = Dateipositionstabelle), die Anzahl der Sektoren, usw. enthält, wie es für Fachleute bekannt ist. Wenn das Hostgerät diese Daten empfangen hat, geht es davon aus, daß das Schnittstellengerät 10 gemäß einem bevorzugten Ausführungsbeispiel der vorliegenden Erfindung ein Festplattenlaufwerk ist. Auf einen Befehl vom Hostgerät, das Verzeichnis des "virtuellen" Festplattenlaufwerks, das von der Schnittstelleneinrichtung 10 dem Hostgerät gegenüber simuliert wird, anzuzeigen, kann der digitale Signalprozessor dem Hostgerät genauso antworten, wie es eine herkömmliche Festplatte tun würde, nämlich indem auf Anfrage die Dateipositionstabelle oder FAT auf einem in der Bootsequenz bestimmten Sektor, der im allgemeinen der erste beschreibbare Sektor ist, gelesen wird und zum Hostgerät übertragen wird, und indem im Anschluß die Datenverzeichnisstruktur der virtuellen Festplatte übertragen wird. Es ist ferner möglich, daß die FAT erst direkt vor dem Lesen oder Speichern von Daten der "virtuellen" Festplatte gelesen wird und nicht bereits beim Initialisieren.

Bei einem bevorzugten Ausführungsbeispiel der vorliegenden Erfindung umfaßt der digitale Signalprozessor 13, der nicht unbedingt als digitaler Signalprozessor sondern auch als beliebiger anderer Mikroprozessor ausgeführt sein kann, einen ersten und einen zweiten Befehlsinterpretierer. Der erste Befehlsinterpretierer führt die gerade genannten Schritte durch, während der zweite Befehlsinterpretierer die Lese/Schreib-Zuordnung zu bestimmten Funktionen durchführt. Besteht nun der Wunsch des Benutzers, von der Sende/Empfangseinrichtung über die Leitung 16 Daten zu lesen, so schickt das Hostgerät einen Befehl zur Schnittstelleneinrichtung, der beispielsweise "Lese Datei xy" lauten könnte. Wie es bereits erwähnt wurde, erscheint die Schnittstelleneinrichtung dem Hostgerät gegenüber wie eine Festplatte. Die zweite Interpretiereinrichtung des digitalen Signalprozessors interpretiert nun den Lesen-Befehl des Hostprozessors durch Entschlüsseln, ob "xy" beispielsweise eine Datei "Echtzeiteingabe", "Konfiguration" oder eine ausführbare Datei bezeichnet, als Datenübertragungsbefehl, wodurch derselbe beginnt, von der Sende/Empfangseinrichtung über die zweite Verbindungseinrichtung Daten zur ersten Verbindungseinrichtung und über die Leitung 11 zum Hostgerät zu übertragen.

Vorzugsweise wird in einer nachfolgend beschriebenen Konfigurationsdatei die Menge von einer Datensende/Empfangseinrichtung zu erfassenden Daten angegeben, indem der Benutzer in der Konfigurationsdatei angibt, daß sich eine Messung z. B. über fünf Minuten erstrecken soll. Für das Hostgerät wird dann die Datei "Echtzeiteingabe" wie eine Datei erscheinen, deren Länge der in den fünf Minuten erwarteten Datenmenge entspricht. Für Fachleute ist es bekannt, daß die Kommunikation zwischen einem Prozessor und einer Festplatte darin besteht, daß der Prozessor der Festplatte Nummern von Blöcken oder Clustern oder Sektoren übermittelt, deren Inhalt er lesen möchte. Aus der FAT weiß der Prozessor, welche Informationen in welchem Block stehen. Die Kommunikation von dem Hostgerät zu dem Schnittstellengerät der vorliegenden Erfindung besteht also bei diesem Szenario in der sehr schnellen Übertragung von Blocknummern und vorzugsweise von Blocknummernbereichen, da eine "virtuelle" Datei "Echtzeiteingabe" nicht fragmentiert sein wird. Will nun das Hostgerät die Datei "Echtzeiteingabe" lesen, so übermittel es einen Bereich von Blocknummern zur Schnittstelleneinrichtung, woraufhin damit begonnen wird, daß über die zweite Verbindungseinrichtung Daten empfangen und über die erste Verbindungseinrichtung zu dem Hostgerät gesendet werden.

Die Speichereinrichtung 14 kann neben dem Befehlsspeicher für den digitalen Signalprozessor, der das Betriebssystem desselben umfaßt und als EPROM oder EEPROM ausgeführt sein kann, einen zusätzlichen Puffer aufweisen, der zu Synchronisationszwecken zwischen der Datenübertragung von der Sende/Empfangseinrichtung zur Schnittstelleneinrichtung 10 und der Datenübertragung von der Schnittstelleneinrichtung 10 zum Hostgerät dient.

Vorzugsweise ist der Puffer als schneller Direktzugriffsspeicher oder RAM-Puffer ausgeführt.

Der Benutzer kann ferner vom Hostgerät aus auf der Schnittstelleneinrichtung 10, die dem Hostgerät gegenüber wie eine Festplatte erscheint, eine Konfigurationsdatei erstellen, deren Einträge automatisch verschiedene Funktionen des Schnittstellengeräts 10 einstellen und steuern. Dies können beispielsweise Verstärkungs-, Multiplex- oder Abtastrateneinstellungen sein. Durch das Erstellen und Editieren einer Konfigurationsdatei, welche üblicherweise eine Textdatei ist, die ohne große Vorkenntnis einfach verständlich ist, kann der Benutzer der Schnittstelleneinrichtung 10 für nahezu beliebiege Sende/Empfangseinrichtungen, die über die Leitung 16 mit der zweiten Verbindungseinrichtung koppelbar sind, die im wesentlichen gleichen Bedienhandlungen durchführen, wodurch eine Fehlerquelle beseitigt wird, die daraus entsteht, daß ein Benutzer für verschiedene Anwendungen viele verschiedene Befehlcodes kennen muß. Bei der Schnittstelleneinrichtung 10 gemäß der vorliegenden Erfindung ist es lediglich notwendig, daß der Benutzer einmal die Konventionen der Konfigurationsdatei notiert, wonach er die Schnittstelleneinrichtung 10 als Schnittstelle zwischen einem Hostgerät und einem nahezu beliebigen Sende/Empfangsgerät verwenden kann.

Durch die Möglichkeit, beliebige Dateien in vereinbarten Formaten unter Berücksichtigung der maximalen Speicherkapazität der Speichereinrichtung auf der Schnittstelleneinrichtung 10 in der Speichereinrichtung 14 abzuspeichern, sind beliebige Erweiterungen oder sogar gänzlich neue Funktionen der Schnittstelleneinrichtung 10 ohne Zeitverlust zu realisieren. Selbst vom Hostgerät ausführbare Dateien, wie z. B. Stapeldateien oder ausführbare Dateien (BAT-Dateien oder EXE-Dateien) oder auch Hilfedateien können in der Schnittstelleneinrichtung implementiert werden und somit die Unabhängikeit der Schnittstelleneinrichtung 10 von jeglicher zusätzlicher Software (abgesehen von den BIOS-Routinen) des Hostgeräts erreichen. Dies vermeidet zum einen Lizenz- bzw. Anmeldungsprobleme. Zum anderen werden Installationen von bestimmten Routinen, die oft verwendet werden können, wie z. B. eine FFT-Routine, um beispielsweise erfaßte Zeitbereichsdaten im Frequenzbereich betrachten zu können, hinfällig, da diese EXE-Dateien bereits auf der Schnittstelleneinrichtung 10 installiert sind und in dem virtuellen Wurzel-Verzeichnis erscheinen, durch das das Hostgerät auf alle beliebigen auf der Schnittstelleneinrichtung 10 gespeicherten Programme zugreifen kann.

Bei einem bevorzugten Ausführungsbeispiel der vorliegenden Erfindung, bei dem die Schnittstelleneinrichtung 10 dem Hostgerät gegenüber ein Festplattenlaufwerk simuliert, wird dieselbe bereits beim Einschalten oder Hochfahren des Hostsystems automatisch erkannt und zum Betrieb bereitgestellt. Dies entspricht dem derzeit immer weiter verbreiteten "Plug-and-Play"-Standard. Der Benutzer muß sich nicht mehr um die Installation der Schnittstelleneinrichtung 10 auf dem Hostgerät durch spezielle zu ladende Treiber kümmern, sondern die Schnittstelleneinrichtung 10 wird beim Hochfahren des Hostsystems automatisch zum Betrieb bereitgestellt.

Für Fachleute ist es jedoch offensichtlich, daß die Schnittstelleneinrichtung 10 nicht notwendigerweise beim Einschalten des Rechners angemeldet wird, sondern daß auf dem Hostgerät auch eine spezielle BIOS-Routine bzw. einen Treiber für eine Vielzweckschnittstelle während des Laufs des Rechners gestartet werden kann, um die Schnittstelleneinrichtung 10 als zusätzliche Festplatte anzubinden oder zu "mounten". Dieses Ausführungsbeispiel ist für größere Workstation-Systeme geeignet, welche im wesentlichen nie ausgeschaltet werden, da sie beispielsweise in einem "Multi-Tasking"-Environment z. B. Mail-Funktionen oder Prozeßüberwachungen, die ständig im Betrieb sind, durchführen werden.

Bei dem Schnittstellengerät gemäß der vorliegenden Erfindung besteht ein enormer Vorteil der Trennung der tatsächlichen Hardware, die zur Verbindung der Schnittstelleneinrichtung 10 mit der Sende/Empfangseinrichtung benötigt wird, wie es aus dem nachfolgend beschriebenen Ausführungsbeispiel offensichtlich ist, von der Kommunikations-Einheit, die durch den digitalen Signalprozessor 13, den Speicher 14 und die erste Verbindungseinrichtung 12 implementiert ist, darin, daß verschiedenste Gerätetypen parallel auf identische Weise bedient werden können. An ein Hostgerät können demnach viele Schnittstelleneinrichtungen 10 angeschlossen werden, dasselbe wird dann verschiedenste sozusagen "virtuelle" Festplatten sehen. Zum anderen ist auch eine eventuelle Änderung der speziellen Hardware, die durch die zweite Verbindungseinrichtung 15 symbolisiert ist, im wesentlichen ohne Veränderung der Bedienung der Schnittstellengeräts gemäß der vorliegenden Erfindung realisierbar. Ferner kann ein erfahrener Anwender jederzeit beliebig tief in die vorhandene zweite Verbindungseinrichtung eingreifen, indem er die oben erwähnte Option des Erstellens einer Konfigurationsdatei oder des Hinzufügens oder Abspeicherns neuer Programmteile für die zweite Verbindungseinrichtung verwendet.

Ein wesentlicher Vorteil der Schnittstelleneinrichtung 10 der vorliegenden Erfindung besteht ferner darin, daß sie extrem hohe Datenübertragungsraten ermöglicht, und zwar bereits dadurch, daß die Hostgerät-eigenen BIOS-Routinen, die vom Hersteller des Hostgeräts bzw. BIOS-Systems für jedes Hostgerät optimiert sind, zum Datenaustausch verwendet werden, bzw. daß üblicherweise vom Hersteller von Vielzweckschnittstellen optimierte und mitgelieferte Treiberprogramme verwendet werden. Außerdem werden die Daten aufgrund der Simulation eines virtuellen Massenspeichers so verwaltet und zur Verfügung gestellt, daß sie direkt gewissermaßen ohne Prozessorintervention des Hostgeräts auf andere Speichermedien, z. B. eine tatsächliche Festplatte des Hostgeräts, übertragen werden können. Die einzige Begrenzung für eine Langzeit-Datenübertragung mit hoher Geschwindigkeit ist daher allein durch die Geschwindigkeit und Speichergröße des Massespeichers des Hostsystems gegeben. Dies ist der Fall, da der digitale Signalprozessor 13 die über die zweite Verbindungseinrichtung 15 von der Sende/Empfangseinrichtung eingelesenen Daten bereits in für eine Festplatte des Hostgeräts geeignete Blockgrößen formatiert, wodurch die Datenübertragungsgeschwindigkeit lediglich durch die mechanische Trägheit des Festplattensystems des Hostgeräts begrenzt ist. An dieser Stelle sei angemerkt, daß üblicherweise ein Datenfluß vom einem Hostgerät in Blöcke formatiert werden muß, um auf einer Festplatte geschrieben werden zu können und anschließend wiedergewonnen werden zu können, wie es für Fachleute bekannt ist.

Durch Einrichtung eines direkten Speicherzugriffs (DMA; DMA = Direct Memory Access) oder RAM-Laufwerks im Hostsystem kann die genannte Datenübertragungsrate nochmals erhöht werden. Wie es für Fachleute bekannt ist, benötigt die Einrichtung eines RAM-Laufwerks jedoch Prozessorresourcen des Hostgeräts, weshalb der Vorteil, bei dem die Daten auf ein Festplattenlaufwerk des Hostgeräts geschrieben werden, und im wesentlichen keine Prozessorresourcen benötigt werden, verlorengeht.

Wie es bereits erwähnt wurde, kann in dem Speicher 14 ein Datenpuffer implementiert sein, der die zeitliche Unabhängigkeit der Sende/Empfangseinrichtung, die mit der zweiten Verbindungseinrichtung gekoppelt ist, von dem Hostgerät, das mit der ersten Verbindungseinrichtung gekoppelt ist, ermöglicht. Auf diese Weise ist selbst bei zeitkritischen Anwendungen der einwandfreie Betrieb der Schnittstelleneinrichtung 10 sogar in Multi-Tasking-Hostsystemen gewährleistet.

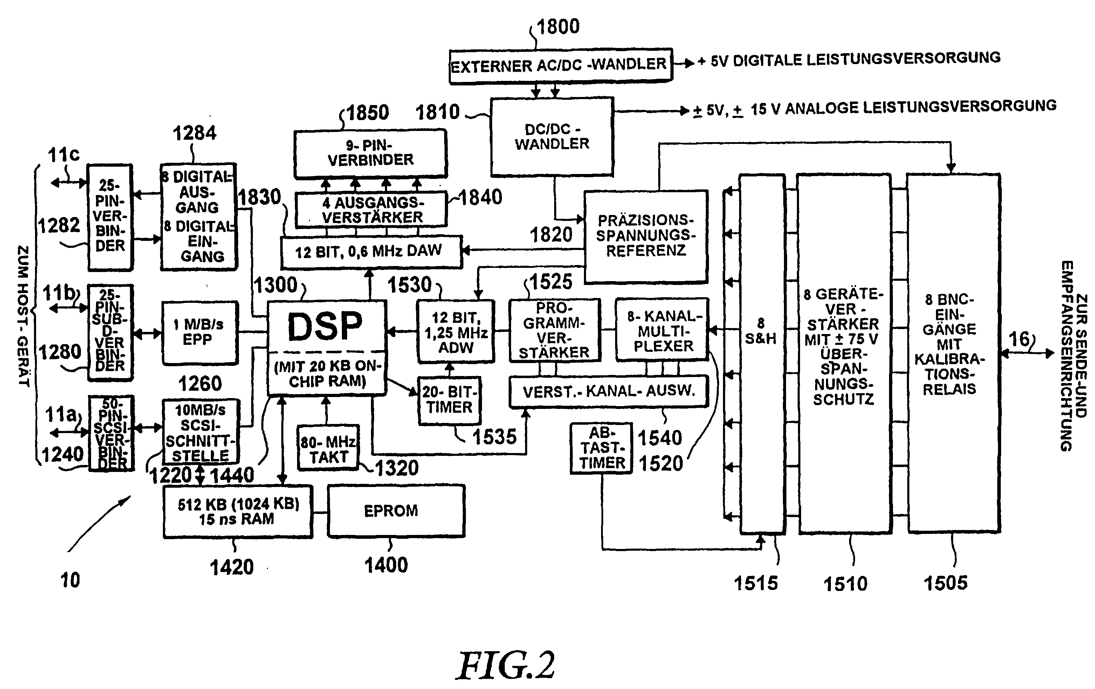

Fig. 2 zeigt ein detailliertes Blockschaltbild einer Schnittstelleneinrichtung 10 gemäß der vorliegenden Erfindung.

Ein digitaler Signalprozessor (DSP) 1300 bildet gewissermaßen das Herzstück der Schnittstelleneinrichtung 10. Der DSP kann ein beliebiger DSP sein, wobei es jedoch bevorzugt wird, daß er einen Auf-Chip-Direkt-Zugriffsspeicher (RAM) von 20 KB aufweist. In dem Direktzugriffsspeicher, der bereits auf dem DSP integriert ist, können beispielsweise bestimmte Befehlssätze gespeichert sein. Mit dem DSP 1300 verbunden ist ein 80-MHz-Taktbauglied 1320, um den DSP zu takten. Der DSP implementiert eine schnelle Fouriertransformation (FFT) in Echtzeit sowie eine optionale Datenkompression für von der Sende/Empfangseinrichtung zu dem Hostgerät zu übertragenden Daten, um eine höhere Effizienz zu erreichen, und um mit Hostgeräten, die kleinere Speichereinrichtungen besitzen, zusammenarbeiten zu können.

Die erste Verbindungseinrichtung 12 von Fig. 1 enthält bei dem in Fig. 2 gezeigten bevorzugten Ausführungsbeispiel der Schnittstelleneinrichtung 10 folgende Bausteine: eine SCSI-Schnittstelle 1220 sowie einen 50-Pin-SCSI-Verbinder 1240 zur Verbindung mit einer bei den meisten Hostgeräten oder Laptops vorhandenen SCSI-Schnittstelle. Die SCSI-Schnittstelle (SCSI = Small Computer System Interface = Kleincomputersystemschnittstelle) 1220 wandelt die über den SCSI-Verbinder 1240 empfangenen Daten in für den DSP 1300 verständliche Daten um, wie es für Fachleute bekannt ist. Die erste Verbindungseinrichtung 12 umfaßt ferner einen EPP mit einer Datenrate von ungefähr 1 MB/s (EPP = Enhanced Parallel Port) für eine im Vergleich zur Datenrate von 10 MB/s der SCSI-Schnittstelle moderateren Datenübertragungsrate von 1 MB/s. Der EPP 1260 ist mit einem 25-Pin-sub-D-Verbinder 1280 verbunden, um beispielsweise an eine Druckerschnittstelle eines Hostgeräts angeschlossen zu werden. Optional umfaßt die erste Verbindungseinrichtung 12 ferner einen 25-Pin-Verbinder 1282, der den Anschluß von 8 Digitalausgängen und 8 Digitaleingängen 1284 an einem Hostgerät ermöglicht.

Die zweite Verbindungseinrichtung umfaßt vorzugsweise 8 BNC-Eingänge mit Kalibrationsrelais 1505, einen Block 1510 mit 8 Geräteverstärkern mit einem Überspannungsschutz von ± 75 V, wobei dieser Block wiederum mit 8 Abtast/Halte-Gliedern 1515 verbunden ist (Abtasten/Halten = Sample/Hold = S&H). Die Kalibrationsrelais sind Relais, die ein gesteuertes Umschalten zwischen einer Meßspannung und einer Kalibrationsreferenzspannung erlauben. Jede Abtast/Halten-Einrichtung ist mit einem entsprechenden Eingang eines 8-Kanal-Multiplexers 1520 verbunden, welcher seine Ausgangssignale über einen programmierbaren Verstärker 1525 in einen Analog/Digital-Wandler (ADW) mit 12 Bit und 1,25 MHz 1530 dem DSP 1300 zuführt. Der ADW 1530 wird mittels eines 20-Bit-Zeitgebers 1535 gesteuert, wie es für Fachleute bekannt ist. Der programmierbare Verstärker 1525 sowie der 8-Kanal-Multiplexer 1520 werden über ein Verstärkungs-Kanal-Auswahlbauglied 1540 gesteuert, das wiederum von dem DSP 1300 gesteuert wird.

Die gesamte Schnittstelleneinrichtung 10 wird von einem externen AC/DC-Wandler 1800 versorgt, der eine digitale Leistungsversorgung von +5 V liefert und mit einem DC/DC-Wandler 1810 verbunden ist, der analoge Leistungsversorgungsspannungen von ± 5 V und ± 15 V liefern kann, wie sie für die Schnittstelleneinrichtung 10 benötigt werden. Der DC/DC-Wandler steuert ferner eine Präzisions-Spannungs-Referenz 1820, die sowohl die 8-BNC-Eingänge 1505 als auch den ADW 1530 sowie einen Digital/Analog-Wandler (DAW) 1830 steuert, welcher über einen Ausgangsverstärkerblock mit 4 Ausgangsverstärkern 1840 und einen 9-Pin-Verbinder 1850 die analoge Ausgabe direkt von dem DSP 1300 zu einer mit dem 9-Pin-Verbinder 1850 verbindbaren Ausgabeeinrichtung, wie z. B. eine Druckereinrichtung oder eine Bildschirmeinrichtung, ermöglicht, wodurch optional eine Datenüberwachung der zu dem Hostgerät übertragenen Daten oder beispielsweise auch, ohne Prozessorzeit von dem Hostgerät zu verwenden, eine FFT betrachtet werden kann, um eine schnelle und umfassende Datenanalyse zu erreichen.

Die Speichereinrichtung 14 von Fig. 1 ist in Fig. 2 durch ein EPROM 1400 implementiert, der bei einem bevorzugten Ausführungsbeispiel der vorliegenden Erfindung das Betriebssystem des digitalen Signalprozessors 1300 hält. Ein Direktzugriffsspeicher mit einer Zugriffszeit von 15 ns und einer Größe von 512 KB oder optional 1024 KB 1420 dient als Datenpuffer, um eine zeitliche Unabhängigkeit der Ausgangsleitung 16 von den Ausgangsleitungen 11a, 11b und 11c zur Sende/Empfangseinrichtung bzw. zum Hostgerät zu erreichen. Wie es bereits erwähnt wurde, enthält der digitale Signalprozessor 1300 bei einem bevorzugten Ausführungsbeispiel der vorliegenden Erfindung bereits einen 20-KB-Auf-Chip-RAM 1440, der bestimmte Befehlssätze, Funktionen oder auch kleinere Anwendungssoftwareeinheiten speichern kann.

Der durch die Leitung 16 symbolisierte Verbindungsanschluß der Schnittstelleneinrichtung 10 mit einer beliebigen Sende/Empfangseinrichtung implementiert mit den Blöcken 1505 - 1535 einen Analogeingang mit einer Abtastrate von 1,25 MHz und einer Quantisierung von 12 Bit. Es existieren 8 Kanäle mit einem Überspannungsschutz von ± 75 V. Mittels des programmierbaren Verstärkers 1525 kann jeder Kanal unabhängig voneinander in Spannungsbereichen von max. ± 10 V programmiert werden. Unbenutzte Kanäle können intern mit Masse verbunden werden, um Nebensprecheffekte zu verringern. Der Block 1515 ist als monolithischer hochgenauer Hochgeschwindigkeits-Abtasten/Halten-Verstärker für das gleichzeitige Abtasten aller Kanäle ausgeführt. Die Präzisionsspannungsreferenz 1820 schafft eine hochgenaue Temperatur-kompensierte monolithische Bandabstandsspannungsreferenz für eine Autokalibration jedes Kanals und jeder Verstärkung. Es ist ferner eine Offset-Feinabstimmung für jeden Kanal durch dieselbe implementiert.

Die Blöcke 1830, 1840 und 1850 implementieren einen direkten Analogausgang für den digitalen Signalprozessor 1300, wobei der DAW 1830 eine Datenrate von 625 KHz und eine Quantisierung von 12 Bit schafft. Der Block 1840 umfaßt 4 Kanäle mit einem gemeinsamen Ausgangslatch.

Die Schnittstelleneinrichtung 10 umfaßt ferner eine digitale Eingabe/Ausgabe-Einrichtung, die durch die Blöcke 1284 und 1282 implementiert ist. Hier existieren 8 digitale Eingänge, 8 digitale Ausgänge mit einem gemeinsamen Latch, wobei der digitale Port vorzugsweise an einer Seitenwand der Schnittstelleneinrichtung 10 angebracht sein kann, damit auf denselben ohne weiteres zugegriffen werden kann.

Der digitale Signalprozessor 1300 liefert eine On-Board-Digitaldatenverarbeitung. Insbesondere ist er ein Hochleistungs-DSP mit einer Taktrate von 80 MHz und einem 20-Bit-Zeitgeber 1535.

Die erste Verbindungseinrichtung 12 umfaßt, wie es bereits erwähnt wurde, die SCSI-Schnittstelle 1220 mit einer Spitzenübertragungsrate von 10 MB/s. Ein optional einsetzbarer PCMCIA-zu-SCSI-Adapter ermöglicht eine Hochgeschwindigkeitskommunikation mit Laptop-Computern, welche besonders bei mobilen Servicetechnikern verbreitet und erwünscht sind. Eine moderatere Datenübertragung ermöglicht der EPP 1260 mit seinem zugehörigen Verbinder 1280.

Wie es bereits erwähnt wurde, wird die Leistungsversorgung der Schnittstelleneinrichtung 10 mittels eines externen AC/DC-Adapters erreicht, der einen Universalleistungseingang (85 - 264 VAC, 47 - 63 Hz) aufweist. Die Interferenzunterdrückung erreicht die Standards EN 55022, Kurve B und FCC, Klasse B). Ferner ist sie gemäß internationalen Sicherheitsbestimmungen (TÜV, UL, CSA) ausgeführt. Die Schnittstelleneinrichtung 10 ist nach außen abgeschirmt und erreicht einen Wert von 55 dB bei 30 - 60 MHz und einen Wert von etwa 40 dB bei 1 GHz, und entspricht somit dem Standard MILSTD 285-1.

Wie es bereits erwähnt wurde, kann die Kommunikation zwischen dem Hostgerät und der vielzweckschnittstelle nicht nur über in dem BIOS-System des Hostgeräts vorhandene Treiber für Hostgerät-übliche Eingabe/Ausgabe-Geräte stattfinden, sondern auch über spezifische Schnittstellentreiber, welche im Falle einer SCSI-Schnittstelle als Vielzweckschnittstelle ASPI-Treiber genannt werden (ASPI = Advanced SCSI Programming Interface). Dieser ASPI-Treiber, der auch als ASPI-Manager bezeichnet werden kann, ist für einen speziellen SCSI-Hostadapter, d. h. für eine spezielle Vielzweck-schnittstelle spezifisch und wird üblicherweise vom Hersteller dieser Vielzweckschnittstelle mitgeliefert. Allgemein gesagt hat dieser Vielzweckschnittstellentreiber die Aufgabe, die genau spezifizierten SCSI-Befehle vom Hostsystem-Programm zum Hostsystem-SCSI-Adapter zu bringen. Daher ist der Befehlssatz beinahe identisch zu dem der SCSI-Schnittstelle selber. Er wird im wesentlichen lediglich um Status- und Reset-Befehle für den Hostadapter erweitert.

Der ASPI-Treiber kann dann eingesetzt werden, wenn zum Zeitpunkt des Bootens die Festplatte noch nicht ansprechbar war, oder wenn die SCSI-bezogenen BIOS-Routinen des Hostrechners noch deaktiviert waren. Auch hier sind die dann einzuleitenden Schritte zum Initialisieren des Schnittstellengeräts vorzugsweise als virtuelle Festplatte den Schritten beim Initialisieren während des Bootens ähnlich.

Der ASPI-Manager umfaßt grob gesprochen zwei Seiten. Die eine Seite ist die herstellerspezifische Hardware-orientierte Seite. Sie übernimmt die Umsetzung aller Befehle in eine Form, die die entsprechende Vielzweckschnittstelle benötigt. Die Hardware-orientierte Seite des ASPI-Treibers ist also auf einen ganz speziellen Typ einer Vielzweckschnittstelle bzw. einer SCSI-Schnittstelle zugeschnitten. Die andere Seite wird als Benutzersoftwareseite bezeichnet. Diese Seite ist absolut unabhängig von den herstellerspezifischen Bedienungseigenschaften des SCSI-Adapters und ist daher für alle SCSI-Schnittstellen gleich. Dies ermöglicht eine SCSI-Programmierung, die jedoch von den einzelnen SCSI-Adaptertypen unabhängig ist.

Der Einsatz eines solchen ASPI-Treibers zur Kommunikation zwischen dem Hostgerät und dem erfindungsgemäßen Schnittstellengerät erlaubt jedoch im Gegensatz zu einer Kommunikation des Hostgeräts mit dem erfindungsgemäßen Schnittstellengerät auf der Basis eines BIOS-Treibers die Ausschöpfung verschiedener weiterer Möglichkeiten der SCSI-Vielzweckschnittstelle. Im vorher beschriebenen Fall wird das Schnittstellengerät, das sich vorzugsweise als virtuelle Festplatte meldet und verhält, beim Booten durch den BIOS-Treiber des Hostrechners erkannt und als Festplatte konfiguriert. Dieser Schritt unterstützt jedoch keine aktiven Anfragen des Schnittstellengeräts an den Hostrechner. Will jedoch die virtuelle Festplatte Daten aktiv auf z. B. eine Festplatte des Hostrechners schreiben bzw. mit dem Prozessor des Hostrechners von sich aus in Verbindung treten, so muß der Hostrechner die Anfrage der virtuellen Festplatte erkennen und einen weiteren Befehlsgeber an seinem Bus dulden. Verhält sich das Schnittstellengerät ausschließlich wie eine virtuelle Festplatte, so würde es immer ein Befehlsempfänger und kein Befehlsgeber sein. Das BIOS wehrt sich zwar nicht gegen einen solchen weiteren Befehlsgeber, welcher aktiv Daten auf den Bus des Hostgeräts geben will, dasselbe unterstützt jedoch das Hostgerät nicht dabei, entsprechende Anfragen des Schnittstellengeräts zu erkennen oder dem Schnittstellengerät für Zugriffe auf den Bus die Erlaubnis zu erteilen.

Das erfindungsgemäße Schnittstellengerät kann jedoch nun unter Verwendung des ASPI-Managers einen aktiven Zugriff auf eine am selben SCSI-Bus angeschlossene SCSI-Festplatte des Hostgeräts erhalten, welche im Gegensatz zum Schnittstellengerät kein virtueller sondern ein realer SCSI-Massenspeicher sein kann oder aber auch ein weiteres erfindungsgemäßes Schnittstellengerät. Daraufhin kann das Schnittstellengerät gemäß der vorliegenden Erfindung völlig unabhängig vom Hostrechner die SCSI-Festplatte des Hostrechners mit erwünschten Daten beschreiben bzw. auf sonstige Art und Weise mit derselben kommunizieren. Das Schnittstellengerät gemäß der vorliegenden Erfindung tritt somit zunächst passiv als virtuelle Festplatte auf und dann bei Bedarf unter Verwendung der Treibersoftware für die Vielzweckschnittstelle aktiv am selben SCSI-Bus auf. Dies bedeutet jedoch, daß das Schnittstellengerät gemäß der vorliegenden Erfindung unter Verwendung einer Treibersoftware für die Vielzweckschnittstelle, die zum einen die Hostgerät-üblichen BIOS-Routinen umfaßt und gleichzeitig die Möglichkeit der aktiven Teilnahme bietet, unabhängig von dem Typ der an die zweite Verbindungseinrichtung angeschlossenen Sende/Empfangseinrichtung zunächst als virtuelle und zugleich passive Festplatte erscheinen kann, jedoch aber bei Bedarf aktiv am Bus teilnehmen kann, um unter Umgehung des Prozessors des Hostgeräts direkt mit anderen SCSI-Festplatten des Hostgeräts in Kontakt treten zu können.

Die Schnittstelleneinrichtung gemäß der vorliegeden Erfindung ermöglicht also unter Verwendung einer Standardschnittstelle eines Hostgeräts die Kommunikation mit beliebigen Hostgeräten. Durch die Simulation eines Eingabe/Ausgabe-Geräts für das Hostgerät und bei einem bevorzugten Ausführungsbeispiel durch Simulation eines virtuellen Massenspeichers wird die Schnittstelleneinrichtung 10 von allen bekannten Hostsystemen ohne jede zusätzliche aufwendige Treibersoftware automatisch unterstützt. Die Simulation einer beliebig definierbaren Dateistruktur auf der "virtuellen" Festplatte liefert einfache Bedienungs- und Erweiterungsmöglichkeiten sowie durch Implementation beliebiger Programme die Unabhängigkeit von spezieller auf dem Hostgerät implementierter Software. Auf der Schnittstelleneinrichtung 10 enthaltene Hilfedateien und die Unterstützung von "Plug-and Play" stellen den einfachen Einsatz selbst in tragbaren flexiblen Hostgeräten sicher. Dem erfahrenen Anwender steht trotz einfachster Bedienungsoberfläche jederzeit die Möglichkeit des systemnahen Eingriffs in Funktionen der Schnittstelleneinrichtung 10 offen. Eine universelle Lösung, die die gesamte Bandbreite möglicher Sende/Empfangseinrichtungen abdecken kann, ist demnach durch die Schnittstelleneinrichtung 10 geschaffen.

## Patentansprüche

1. Schnittstellengerät (10) zur Kommunikation zwischen einem Hostgerät, das Treiber für Hostgerät-übliche Eingabe/Ausgabe-Geräte sowie eine Vielzweck-Schnittstelle aufweist, und einer Datensende/Empfangseinrichtung, mit folgenden Merkmalen:
einer Prozessoreinrichtung (13; 1300, 1320);
einer Speichereinrichtung (14; 1400, 1420, 1440);
einer ersten Verbindungseinrichtung (12; 1220, 1240, 1260, 1280) zum schnittstellenmäßigen Verbinden des Hostgeräts mit dem Schnittstellengerät (10) über die Vielzweck-Schnittstelle des Hostgeräts; und
einer zweiten Verbindungseinrichtung (15; 1505 - 1535) zum schnittstellenmäßigen Verbinden der Schnittstellengeräts (10) mit der Datensende/Empfangseinrichtung,
wobei das Schnittstellengerät (10) durch die Prozessoreinrichtung (13; 1300, 1320) und die Speichereinrichtung (14; 1400, 1420, 1440) derart konfiguriert ist, daß das Schnittstellengerät bei einer Anfrage des Hostgeräts, die die Art eines an der Vielzweckschnittstelle des Hostgeräts angeschlossenen Geräts betrifft, unabhängig von dem Typ der mit der zweiten Verbindungseinrichtung (15; 1505 - 1535) des Schnittstellengeräts (10) verbundenen Datensende/Empfangseinrichtung ein Signal dem Hostgerät sendet, das dem Hostgerät signalisiert, daß es ein Hostgerät-übliches Eingabe/Ausgabe-Gerät ist, woraufhin das Hostgerät mittels des Treibers für das Hostgerät-übliche Eingabe/Ausgabe-Gerät mit dem Schnittstellengerät (10) kommuniziert.

2. Schnittstellengerät (10) nach Anspruch 1,
bei dem die Treiber für Hostgerät-übliche Eingabe/Ausgabe-Geräte einen Festplattentreiber aufweisen, wobei das Signal dem Hostgerät signalisiert, daß dasselbe mit einer Festplatte kommuniziert.

3. Schnittstellengerät (10) nach Anspruch 1 oder 2,
bei dem die Speichereinrichtung einen Puffer (1420) aufweist, um zwischen der Datensende/Empfangseinrichtung und dem Hostgerät übertragbare Daten zwischenzuspeichern.

4. Schnittstellengerät (10) nach einem der vorhergehenden Ansprüche,
bei dem die Vielzweckschnittstelle des Hostgeräts eine SCSI-Schnittstelle ist und die erste Verbindungseinrichtung ebenfalls eine SCSI-Schnittstelle (1220) aufweist.

5. Schnittstellengerät (10) nach einem der vorhergehenden Ansprüche,
bei dem die zweite Verbindungseinrichtung einen Analogeingang (1505) mit nachfolgendem A/D-Wandler (1530) aufweist, um analoge Daten von einem mit dem Analogeingang (1505) verbindbaren Datensende/Empfangsgerät zu dem Hostgerät zu übertragen.

6. Schnittstellengerät (10) nach einem der vorhergehenden Ansprüche,
bei dem die Prozessoreinrichtung (13) ein digitaler Signalprozessor (1300) ist.

7. Schnittstellengerät (10) nach einem der Ansprüche 2 bis 6,
bei dem von der Datensende/Empfangseinrichtung zum Hostgerät zu übertragende Daten in dem Schnittstellengerät (10) in ein für eine in dem Hostgerät vorhandene Festplatte geeignetes Format formatiert werden.

8. Schnittstellengerät (10) nach einem der Ansprüche 2 bis 7,
das ferner ein Wurzelverzeichnis und virtuelle Dateien, die auf dem signalisierten Festplattenlaufwerk vorhanden sind, aufweist, auf die von dem Hostgerät zugegriffen werden kann.

9. Schnittstellengerät (10) nach Anspruch 8,
bei dem die virtuellen Dateien eine Konfigurationsdatei im Textformat aufweisen, die in der Speichereinrichtung (14) gespeichert sind, mittels der der Benutzer das Schnittstellengerät (10) für eine spezielle Datensende/Empfangseinrichtung konfigurieren kann.

10. Schnittstellengerät (10) nach Anspruch 8 oder 9,
bei dem die virtuellen Dateien Stapeldateien oder ausführbare Dateien für die Mikroprozessereinrichtung aufweisen, die in der Schnittstelleneinrichtung (10) gespeichert sind, um eine vom Hostgerät getrennte Datenverarbeitung von über die zweite Verbindungseinrichtung (15; 1505 - 1535) empfangenen Daten durchzuführen.

11. Schnittstellengerät (10) nach Anspruch 8 oder 9,
bei dem die virtuellen Dateien Stapeldateien oder ausführbare Dateien für das Hostgerät aufweisen, die in dem Schnittstellengerät (10) gespeichert sind.

12. Schnittstellengerät (10) zur Kommunikation zwischen einem Hostgerät, das eine Vielzweck-Schnittstelle sowie einen dafür spezifischen Treiber aufweist, und einer Datensende/Empfangseinrichtung, mit folgenden Merkmalen:
einer Prozessoreinrichtung (13; 1300, 1320);
einer Speichereinrichtung (14; 1400, 1420, 1440);
einer ersten Verbindungseinrichtung (12; 1220, 1240, 1260, 1280) zum schnittstellenmäßigen Verbinden des Hostgeräts mit dem Schnittstellengerät (10) über die Vielzweck-Schnittstelle des Hostgeräts; und
einer zweiten Verbindungseinrichtung (15; 1505 - 1535) zum schnittstellenmäßigen Verbinden der Schnittstellengeräts (10) mit der Datensende/Empfangseinrichtung,
wobei das Schnittstellengerät (10) durch die Prozessoreinrichtung (13; 1300, 1320) und die Speichereinrichtung (14; 1400, 1420, 1440) derart konfiguriert ist, daß das Schnittstellengerät bei einer Anfrage des Hostgeräts, die die Art eines an der Vielzweckschnittstelle des Hostgeräts angeschlossenen Geräts betrifft, unabhängig von dem Typ der mit der zweiten Verbindungseinrichtung (15; 1505 - 1535) des Schnittstellengeräts (10) verbundenen Datensende/Empfangseinrichtung ein Signal dem Hostgerät sendet, das dem Hostgerät signalisiert, daß es ein Hostgerät-übliches Eingabe/Ausgabe-Gerät ist, woraufhin das Hostgerät mittels des für die Vielzweck-schnittstelle spezifischen Treibers mit dem Schnittstellengerät (10) kommuniziert.

13. Schnittstellengerät nach Anspruch 12,
bei dem sich neben der ersten Verbindungseinrichtung des Schnittstellengeräts eine Festplatte an der Vielzweck-Schnittstelle des Hostgeräts befindet, und bei dem das Schnittstellengerät eine direkte Kommunikation mit der Festplatte über den spezifischen Treiber für die Vielzweck-Schnittstelle durchführen kann.

14. Schnittstellengerät nach Anspruch 12 oder 13,
bei dem die Vielzweck-Schnittstelle eine SCSI-Schnittstelle ist, und bei dem der spezifische Treiber für die Vielzweck-Schnittstelle ein ASPI-Manager ist.

15. Verfahren zur Kommunikation zwischen einem Hostgerät, das Treiber für Hostgerät-übliche Eingabe/Ausgabe-Geräte sowie eine Vielzweck-Schnittstelle aufweist, und einer Datensende/Empfangseinrichtung über ein Schnittstellengerät (10), mit folgenden Schritten:
schnittstellenmäßiges Verbinden des Hostgeräts mit einer ersten Verbindungseinrichtung (12; 1220, 1240, 1260, 1280) des Schnittstellengeräts (10) über die Vielzweck-schnittstelle des Hostgeräts;
schnittstellenmäßiges Verbinden der Datensende/Empfangseinrichtung mit einer zweiten Verbindungseinrichtung (15; 1505 - 1535) des Schnittstellengeräts (10);
Anfragen bei dem Schnittstellengerät (10) durch das Hostgerät, welcher Typ eines Geräts mit der Vielzweckschnittstelle des Hostgeräts verbunden ist;
unabhängig davon, welcher Typ einer Datensende/Empfangseinrichtung mit der zweiten Verbindungseinrichtung des Schnittstellengeräts (10) verbunden ist, Beantworten der Anfrage des Hostgeräts durch das Schnittstellengerät (10), derart, daß es ein Hostgerät-übliches Eingabe/Ausgabe-Gerät ist, woraufhin das Hostgerät mittels des für das Eingabe/Ausgabe-Gerät üblichen Treibers mit dem Schnittstellengerät (10) kommuniziert.

16. Verfahren nach Anspruch 15,
bei dem die Treiber für Hostgerät-übliche Eingabe/Ausgabe-Geräte einen Treiber für ein Speichergerät und insbesondere für ein Festplattenlaufwerk aufweist.

## Claims

1. An interface device (10) for communication between a host device, which comprises drivers for input/output devices customary in a host device and a multi-purpose interface, and a data transmit/receive device comprising the following features:
a processor means (13; 1300, 1320);
a memory means (14; 1400, 1420, 1440);
a first connecting device (12; 1220, 1240, 1260, 1280) for interfacing the host device with the interface device (10) via the multi-purpose interface of the host device; and
a second connecting device (15; 1505 - 1535) for interfacing the interface device (10) with the data transmit/receive device,
wherein the interface device (10) is configured by the processor means (13; 1300, 1320) and the memory means (14; 1400, 1420, 1440) in such a way that the interface device, when receiving an inquiry from the host device as to the type of a device attached to the multi-purpose interface of the host device, sends a signal, regardless of the type of the data transmit/receive device attached to the second connecting device (15; 1505 - 1535) of the interface device (10), to the host device which signals to the host device that it is an input/output device customary in a host device, whereupon the host device communicates with the interface device (10) by means of the driver for the input/output device customary in a host device.

2. An interface device (10) according to claim 1,
wherein the drivers for input/output drivers customary in a host device comprise a hard disk driver, and the signal indicates to the host device that the host device is communicating with a hard disk.

3. An interface device (10) according to claim 1 or 2,
wherein the memory means comprises a buffer (1420) to buffer data to be transferred between the data transmit/receive device and the host device.

4. An interface device (10) according to one of the preceding claims,
wherein the multi-purpose interface of the host device is an SCSI interface and the first connecting device also comprises an SCSI interface (1220).

5. An interface device (10) according to one of the preceding claims,
wherein the second connecting device comprises an analog input (1505) with a subsequent A/D converter (1530) in order to transfer analog data to the host device from a data transmit/receive device connectable to the analog device (1505).

6. An interface device (10) according to one of the preceding claims,
wherein the processor means (13) is a digital signal processor (1300).

7. An interface device (10) according to one of the claims 2 to 6,
wherein the data to be transferred from the data transmit/receive device to the host device in the interface device (10) is formatted in a suitable format for a hard disk present in the host device.

8. An interface device (10) according to one of the claims 2 to 7,
which further comprises a root directory and virtual files which are present on the signaled hard disk drive and which can be accessed from the host device.

9. An interface device (10) according to claim 8,
wherein the virtual files comprise a configuration file in text format which are stored in the memory means (14) and using which the user can configure the interface device (10) for a specific data transmit/receive device.

10. An interface device (10) according to claim 8 or 9,
wherein the virtual files comprise batch files or executable files for the microprocessor means which are stored in the interface device (10) in order to perform data processing, independently of the host device, of data received via the second connecting device (15; 1505 - 1535).

11. An interface device (10) according to claim 8 or 9,
wherein the virtual files comprise batch files or executable files for the host device which are stored in the interface device (10).

12. An interface device (10) for communication between a host device, which comprises a multi-purpose interface and a specific driver for this interface, and a data transmit/receive device comprising the following features:
a processor means (13; 1300, 1320);
a memory means (14; 1400, 1420, 1440);
a first connecting device (12; 1220, 1240, 1260, 1280) for interfacing the host device with the interface device (10) via the multi-purpose interface of the host device; and
a second connecting device (15; 1505 - 1535) for interfacing the interface device (10) with the data transmit/receive device,
where the interface device (10) is configured using the processor means (13; 1300, 1320) and the memory means (14; 1400, 1420, 1440) in such a way that the interface device, when receiving an inquiry from the host device as to the type of a device attached at the multi-purpose interface of the host device, sends a signal, regardless of the type of the data transmit/receive device attached to the second connecting device (15; 1505 - 1535) of the interface device (10), to the host device which signals to the host device that it is an input/output device customary in a host device, whereupon the host device communicates with the interface device (10) by means of the specific driver for the multi-purpose interface.

13. An interface device according to claim 12,
wherein, in addition to the first connecting device of the interface device, there is a hard disk at the multi-purpose interface of the host device, and wherein the interface device can communicate directly with the hard disk via the specific driver for the multi-purpose interface.

14. An interface device according to claim 12 or 13,
wherein the multi-purpose interface is an SCSI interface, and wherein the specific driver for the multi-purpose interface is an ASPI manager.

15. A method of communication between a host device, which comprises drivers for input/output devices customary in a host device and a multi-purpose interface, and a data transmit/receive device via an interface device (10) comprising the following steps:
interfacing of the host device with a first connecting device (12; 1220, 1240, 1260, 1280) of the interface device (10) via the multi-purpose interface of the host device;
interfacing of the data transmit/receive device with a second connecting device (15; 1505 - 1535) of the interface device (10);
inquiring by the host device at the interface device (10) as to the type of device to which the multi-purpose interface of the host device is attached;
regardless of the type of the data transmit/receive device attached to the second connecting device of the interface device (10), responding to the inquiry from the host device by the interface device (10) in such a way that it is an input/output device customary in a host device, whereupon the host device communicates with the interface device (10) by means of the usual driver for the input/output device.

16. A method according to claim 15,
wherein the drivers for input/output devices customary in a host device comprise a driver for a storage device and in particular for a hard disk drive.

## Revendications

1. Dispositif d'interface (10) pour la communication entre un ordinateur hôte, présentant des unités de gestion de dispositifs d'entrée/sortie habituels d'un ordinateur hôte ainsi qu'une interface multifonction, et un dispositif de transmission/réception de données, aux caractéristiques suivantes:
un dispositif processeur (13 ; 1300, 1320) ;
un dispositif de mémoire (14 ; 1400, 1420, 1440) ;
un premier dispositif de connexion (12 ; 1220, 1240, 1260, 1280) destiné à relier, par l'interface, l'ordinateur hôte au dispositif d'interface (10), par l'intermédiaire de l'interface multifonction de l'ordinateur hôte ; et
un second dispositif de connexion (15 ; 1505 - 1535) destiné à relier, par l'interface, le dispositif d'interface (10) au dispositif de transmission/réception de données,
dans lequel le dispositif d'interface (10) est configuré, par le dispositif processeur (13 ; 1300, 1320) et le dispositif de mémoire (14 ; 1400, 1420, 1440) de telle sorte que, lors d'une interrogation par l'ordinateur hôte sur le type de dispositif raccordé à l'interface multifonction de l'ordinateur hôte, le dispositif d'interface envoie à l'ordinateur hôte, indépendamment du type du dispositif de transmission/réception de données raccordé au second dispositif de connexion (15 ; 1505 - 1535) du dispositif d'interface (10), un signal qui signale à l'ordinateur hôte qu'il s'agit d'un dispositif d'entrée/sortie habituel pour l'ordinateur hôte, après quoi l'ordinateur hôte communique, à l'aide de l'unité de gestion du dispositif d'entrée/sortie habituel pour l'ordinateur hôte, avec le dispositif d'interface (10).

2. Dispositif d'interface (10) suivant la revendication 1, dans lequel les unités de gestion de dispositifs d'entrée/sortie habituels pour l'ordinateur hôte présentent une unité de gestion de disque dur, le signal communiquant à l'ordinateur hôte que celui-ci communique avec un disque dur.

3. Dispositif d'interface (10) suivant la revendication 1 ou 2, dans lequel le dispositif de mémoire présente un tampon (1420) en vue d'une mémorisation intermédiaire, entre le dispositif de transmission/réception de données et l'ordinateur hôte, de données pouvant être transmises.

4. Dispositif d'interface (10) suivant l'une des revendications précédentes, dans lequel l'interface multifonction de l'ordinateur hôte est une interface SCSI et le premier dispositif de connexion présente également une interface SCSI (1220).

5. Dispositif d'interface (10) suivant l'une des revendications précédentes, dans lequel le second dispositif de connexion présente une entrée analogique (1505) suivie d'un convertisseur A/N (1530), pour transmetre à l'ordinateur hôte des données analogiques d'un dispositif de transmission/réception pouvant être raccordé à l'entrée analogique (1505).

6. Dispositif d'interface (10) suivant l'une des revendications précédentes, dans lequel le dispositif processeur (13) est un processeur de signaux numériques (1300).

7. Dispositif d'interface (10) suivant l'une des revendications 2 à 6, dans lequel les données à transmettre du dispositif de transmission/réception à l'ordinateur hôte sont formattées, dans le dispositif d'interface (10), en un format approprié pour un disque dur présent dans l'ordinateur hôte.

8. Dispositif d'interface (10) suivant l'une des revendications 2 à 7, présentant, par ailleurs, un contenu-racine et des fichiers de données virtuels présents à l'unité de gestion de disque dur signalé, auxquels peut être accédé par l'ordinateur hôte.

9. Dispositif d'interface (10) suivant la revendication 8, dans lequel les fichiers de données virtuels présentent un fichier de données de configuration en format de texte, mémorisé dans le dispositif de mémoire, par lequel l'utilisateur peut configurer le dispositif d'interface (10) pour un dispositif de transmission/réception particulier.

10. Dispositif d'interface (10) suivant la revendication 8 ou 9, dans lequel les fichiers de données virtuels présentent des fichiers d'accumulation ou des fichiers d'exécution pour le dispositif microprocesseur, mémorisés dans le dispositif d'interface (10), pour effectuer un traitement de données, séparé de l'ordinateur hôte, des données reçues par l'intermédiaire du second dispositif de connexion (15 ; 1505 - 1535).

11. Dispositif d'interface (10) suivant la revendication 8 ou 9, dans lequel les fichiers de données virtuels présentent des fichiers d'accumulation ou des fichiers d'exécution pour l'ordinateur hôte, mémorisés dans le dispositif d'interface (10).

12. Dispositif d'interface (10) pour la communication entre un ordinateur hôte, présentant une interface multifonction ainsi qu'une unité de gestion spécifique à cette dernière, et un dispositif de transmission/réception de données, aux caractéristiques suivantes:
un dispositif processeur (13 ; 1300, 1320) ;
un dispositif de mémoire (14 ; 1400, 1420, 1440) ;
un premier dispositif de connexion (12 ; 1220, 1240, 1260, 1280) destiné à relier, par l'interface, l'ordinateur hôte au dispositif d'interface (10), par l'intermédiaire de l'interface multifonction de l'ordinateur hôte ; et
un second dispositif de connexion (15 ; 1505 - 1535) destiné à relier, par l'interface, le dispositif d'interface (10) au dispositif de transmission/réception de données,
dans lequel le dispositif d'interface (10) est configuré, par le dispositif processeur (13 ; 1300, 1320) et le dispositif de mémoire (14 ; 1400, 1420, 1440) de telle sorte que, lors d'une interrogation par l'ordinateur hôte sur le type de dispositif raccordé à l'interface multifonction de l'ordinateur hôte, le dispositif d'interface envoie à l'ordinateur hôte, indépendamment du type du dispositif de transmission/réception de données raccordé au second dispositif de connexion (15 ; 1505 - 1535) du dispositif d'interface (10), un signal qui signale à l'ordinateur hôte qu'il s'agit d'un dispositif d'entrée/sortie habituel pour l'ordinateur hôte, après quoi l'ordinateur hôte communique, à l'aide de l'unité de gestion spécifique à l'interface multifonction, avec le dispositif d'interface (10).

13. Dispositif d'interface suivant la revendication 12, dans lequel se trouve à l'interface multifonction de l'ordinateur hôte, outre le premier dispositif de connexion de l'interface, un disque dur et dans lequel l'interface peut réaliser une communication directe avec le disque dur, par l'intermédiaire de l'unité de gestion spécifique à l'interface multifonction.

14. Dispositif d'interface suivant la revendication 12 ou 13, dans lequel l'interface multifonction est une interface SCSI et dans lequel l'unité de gestion spécifique à l'interface multifonction est un gestionnaire ASPI.

15. Procédé de communication entre un ordinateur hôte, présentant des unités de gestion de dispositifs d'entrée/sortie habituels d'un ordinateur hôte ainsi qu'une interface multifonction, et un dispositif de transmission/réception de données, par l'intermédiaire d'un dispositif d'interface (10), aux étapes suivantes consistant à:
relier, par l'interface, l'ordinateur hôte à un premier dispositif de connexion (12 ; 1220, 1240, 1260, 1280) du dispositif d'interface (10), par l'intermédiaire de l'interface multifonction de l'ordinateur hôte ;
relier, par l'interface, le dispositif de transmission/réception de données à un second dispositif de connexion (15 ; 1505- 1535) du dispositif d'interface (10) ;
interroger le dispositif d'interface (10), par l'ordinateur hôte, sur le type d'appareil qui est raccordé à l'interface multifonction de l'ordinateur hôte ;
indépendamment du type de dispositif de transmission/réception de données raccordé au second dispositif de connexion du dispositif d'interface (10), répondre à la demande de l'ordinateur hôte, par l'intermédiaire du dispositif d'interface (10), qu'il s'agit d'un dispositif d'entrée/sortie habituel pour l'ordinateur hôte, après quoi l'ordinateur hôte communique, à l'aide de l'unité de gestion de dispositif d'entrée/sortie habituel, avec le dispositif d'interface (10).

16. Procédé suivant la revendication 15, dans lequel les unités de gestion de dispositifs d'entrée/sortie habituels pour l'ordinateur hôte présentent un dispositif de gestion de dispositif de mémoire et, en particulier, d'une unité de disque dur.
